(19) Europäisches Patentamt
European Patent Office
Office européen des brevets

(11) **EP 2 756 326 B1**

(12) **FASCICULE DE BREVET EUROPEEN**

(45) Date de publication et mention
de la délivrance du brevet:
**17.08.2016 Bulletin 2016/33**

(21) Numéro de dépôt: **12758508.1**

(22) Date de dépôt: **14.09.2012**

(51) Int Cl.:
*G01S 5/02* *(2006.01)*       *H04W 48/16* *(2009.01)*
*H04W 4/02* *(2009.01)*

(86) Numéro de dépôt international:
**PCT/EP2012/068052**

(87) Numéro de publication internationale:
**WO 2013/037935 (21.03.2013 Gazette 2013/12)**

(54) **DISPOSITIF ET METHODE DE COLLECTE D'INFORMATIONS RELATIVES A DES POINTS D'ACCES**

VORRICHTUNG UND VERFAHREN ZUM SAMMELN VON INFORMATIONEN BEZÜGLICH ZUGANGSPUNKTEN

DEVICE AND METHOD FOR COLLECTING INFORMATION RELATING TO ACCESS POINTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2011 FR 1158208**

(43) Date de publication de la demande:
**23.07.2014 Bulletin 2014/30**

(73) Titulaire: **Pole Star**
**31100 Toulouse (FR)**

(72) Inventeurs:
• **TERRENOIR, Stéphane**
**F-31500 Toulouse (FR)**
• **GODEFROY, Baptiste**
**F-31410 Saint Sulpice sur Leze (FR)**
• **CHOUKI, Jaouad**
**F-31100 Toulouse (FR)**
• **BERTRAND, Yan**
**F-31100 Toulouse (FR)**

(74) Mandataire: **Ahner, Philippe**
**BREVALEX**
**95, rue d'Amsterdam**
**75378 Paris Cedex 8 (FR)**

(56) Documents cités:
**US-A1- 2009 005 972     US-A1- 2011 117 924**

**Description**

**DOMAINE TECHNIQUE**

La présente invention concerne le domaine de la collecte d'informations relatives aux points d'accès d'un réseau de télécommunication sans fil. Elle trouve notamment application dans la localisation d'un terminal mobile à partir d'empreintes RSS (*RSS fingerprints*) dans un environnement de type *indoor.*

**ÉTAT DE LA TECHNIQUE ANTÉRIEURE**

Les systèmes de positionnement satellitaire sont bien connus de l'état de la technique. Les téléphones mobiles de la dernière génération, dits téléphones intelligents (*smartphones*), intègrent généralement un récepteur GPS capables de fournir la localisation de l'utilisateur. Toutefois, ce système de localisation n'est pas opérationnel lorsque l'utilisateur se trouve à l'intérieur d'un bâtiment et de manière générale dans un environnement de type « intérieur » (*indoor*). Il est connu de recourir alors à un positionnement à l'aide d'un voire de plusieurs réseaux de télécommunication sans fil déployés dans ledit environnement, par exemple un réseau de téléphonie mobile de troisième génération ou un réseau Wi-Fi.

Nous désignerons dans la suite par le terme générique de « point d'accès » un émetteur/récepteur capable de fournir un accès à un réseau de télécommunication sans fil. Ainsi, un point d'accès correspond à une station de base (BTS) dans un réseau de télécommunication cellulaire de type GSM ou UMTS, voire un réseau sans fil de type WiMAX, et à une borne d'accès dans un réseau Wi-Fi.

Plusieurs méthodes de localisation à l'aide de points d'accès sont connues de l'état de la technique.

Une première méthode consiste à déterminer la position de l'utilisateur à partir des puissances d'émission des différents points d'accès, de leurs positions respectives, et des puissances reçues ou RSS (*Received Signal Strength*) de ces points d'accès par le terminal mobile. Cette méthode est toutefois sensible aux multi-trajets et nécessite en pratique des calculs relativement complexes prenant en compte un modèle de propagation dans l'environnement du terminal. L'obtention de résultats satisfaisants nécessite une modélisation fine de l'environnement en question et par conséquent des coûts de développement important.

Une seconde méthode consiste à collecter préalablement sur le terrain des mesures de la puissance des signaux reçus des différents points d'accès. Cette collecte peut être faite de manière systématique ou collaborative mais nécessite en tout état de cause l'acquisition d'une quantité importante de mesures qui sont ensuite stockées dans une base de données. En général, pour chaque lieu de mesure, on stocke les identifiants des points d'accès et les niveaux de puissance reçue (RSS) de chacun de ces points. L'ensemble des identifiants associés aux puissances mesurées est une caractéristique du lieu de mesure, encore appelée empreinte RSS (*RSS* fingerprint) du lieu en question.

Lorsqu'un utilisateur souhaite ensuite déterminer sa position au moyen de son terminal mobile, celui-ci mesure les puissances reçues des points d'accès environnants. La liste des points d'accès avec leurs niveaux de puissance respectifs, autrement dit la signature RSS obtenue par le terminal, est alors comparée aux signatures RSS présentes dans la base de données. La position du terminal est alors déterminée à partir des lieux dont la signature RSS est la plus proche de celle obtenue par le terminal.

L'acquisition préalable des signatures radio est une opération fastidieuse et coûteuse. En outre, la base de données qui les contient doit être mise à jour régulièrement pour prendre en compte d'éventuelles modifications de l'environnement.

Un outil logiciel dénommé « *Place Lab Spotter* » a été développé pour permettre à un terminal mobile de scanner en temps réel son environnement radio (puissances reçues des points d'accès Wi-Fi, GSM, etc. selon la plateforme envisagée) et d'associer à chaque mesure la position GPS du terminal. Cet outil ne fonctionne toutefois correctement que dans les zones où la localisation par GPS est disponible : il n'est donc pas adapté à la localisation dans un environnement de type *indoor.* On trouvera par exemple une description de l'outil logiciel précité dans l'article de T. Sohn et al. intitulé « Expériences with Place Lab : an open source toolkit for location aware computing », publié of the 28th International Conference on Software Engineering (ICSE 2006).

En outre, il n'existe actuellement pas de terminal mobile doté d'une interface conviviale permettant l'acquisition en temps réel et la collecte rapide de signatures RSS dans un environnement donné.

La demande US2009/0005972 décrit une méthode de positionnement d'un terminal mobile à l'aide de motifs de transitions intercellulaires. Cette méthode per-met d'estimer la position d'un terminal mobile lorsque le positionnement GPS n'est pas disponible.

Un but de la présente invention est de proposer une méthode et un dispositif de collecte d'informations relatives aux points d'accès d'au moins un réseau de télécommunication sans fil, notamment de signatures RSS, qui soit d'utilisation particulièrement simple et rapide.

**EXPOSÉ DE L'INVENTION**

La présente invention est définie par un terminal mobile destiné à collecter des informations relatives aux points d'accès d'au moins un réseau de télécommunication sans fil, comprenant :

- un écran tactile pour afficher une carte d'une zone d'intérêt;

- une mire, affichée sur l'écran tactile et immobile par rapport à ce dernier, la mire étant destinée à pointer un lieu sur cette carte ;
- des moyens de validation pour valider que la position de l'utilisateur du terminal est celle du lieu ainsi pointé par la mire sur ladite carte ;
- des moyens logiciel pour :
- enregistrer les coordonnées du lieu pointé par la mire, à chaque validation de la position de l'utilisateur par lesdits moyens de validation, les coordonnées étant horodatées par une horloge du terminal mobile;
- déclencher en des instants successifs l'acquisition d'informations relatives aux points d'accès du réseau de télécommunication sans fil, lesdites informations étant horodatées au moyen d'une horloge du terminal mobile.

Les informations relatives aux points d'accès peuvent notamment comprendre des niveaux de puissance des signaux respectivement reçus par ledit terminal de ces points d'accès.

Alternativement les informations relatives aux points d'accès peuvent comprendre une indication de détection/non-détection d'au moins l'un desdits points d'accès.

En outre, les informations relatives aux points d'accès peuvent comprendre, pour chaque point d'accès, un identifiant de ce point d'accès.

Enfin, les informations relatives aux points d'accès peuvent comprendre, pour chaque point d'accès, un temps de propagation aller-retour entre le terminal mobile et ce point d'accès.

Selon un exemple de réalisation, le terminal mobile comprend un récepteur GPS et les moyens logiciel déclenchent aux dits instants successifs l'acquisition d'informations de visibilité de différents satellites, lesdites informations étant horodatées au moyen de ladite horloge.

En outre le terminal peut comprendre de manière générale au moins un capteur d'une grandeur physique, les moyens logiciel déclenchant aux dits instants successifs l'acquisition de mesures physiques par ledit capteur, lesdites mesures étant horodatées au moyen de ladite horloge. Ledit capteur appartient à un ensemble constitué d'un accéléromètre, d'un vélocimètre, d'un magnétomètre (tel qu'un compas électronique), d'un baromètre.

Les moyens d'affichage comprennent un écran tactile et les moyens de pointage comprennent une mire affichée sur ledit écran.

La mire est immobile par rapport à l'écran tactile.

La carte peut être déplacée en fonction de l'attitude du terminal.

Alternativement, la carte peut être déplacée en fonction de la vitesse et du cap de l'utilisateur.

Les moyens de validation peuvent automatiquement valider la position de l'utilisateur lorsqu'une variation de cap est détectée.

L'invention est également définie par une méthode de collecte d'informations relatives aux points d'accès d'au moins un réseau de télécommunication sans fil dans une zone d'intérêt, à l'aide du terminal mobile exposé ci-dessus, selon laquelle, pour chaque acquisition desdites informations, on détermine la position de l'utilisateur à l'instant de ladite acquisition en effectuant une interpolation entre :

- une première position de l'utilisateur validée par les moyens de validation en un premier instant de validation précédant l'instant de ladite acquisition ;
- une seconde position de l'utilisateur validée par les moyens de validation en un second instant de validation suivant l'instant de ladite acquisition.

On associe à la position de l'utilisateur à l'instant de ladite acquisition, ainsi déterminée par interpolation, les informations relatives aux points d'accès du réseau de télécommunication sans fil, obtenues par le terminal mobile à l'instant de ladite acquisition.

La position de l'utilisateur ainsi que lesdites informations relatives aux points d'accès sont avantageusement transmises à un serveur distant et stockées dans une base de données.

Le serveur peut déterminer un indicateur de couverture dans la zone d'intérêt et le transmettre au terminal mobile pour l'afficher sur l'écran de ce dernier en superposition avec la carte de ladite zone.

Le serveur peut également déterminer un indicateur de qualité de positionnement dans la zone d'intérêt et le transmettre au terminal mobile pour l'afficher sur l'écran de ce dernier en superposition avec la carte de ladite zone.

Enfin, on peut prévoir que l'utilisateur est équipé d'au moins un autre terminal. Dans ce cas, cet autre terminal de l'utilisateur peut être adapté à synchroniser son horloge avec celle du terminal mobile et à partager avec lui la position de l'utilisateur obtenue à chaque validation, ledit autre terminal déclenchant en outre l'acquisition de secondes informations relatives aux points d'accès du réseau de télécommunication sans fil en des instants successifs, lesdites secondes informations étant horodatées au moyen de l'horloge ainsi synchronisée.

Le réseau de télécommunication sans fil est typiquement un réseau Wi-Fi.

BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

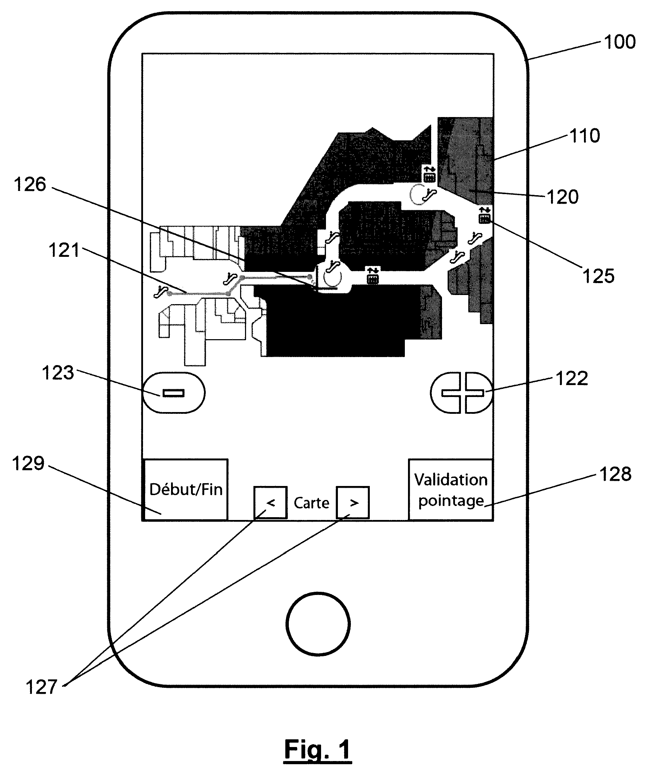

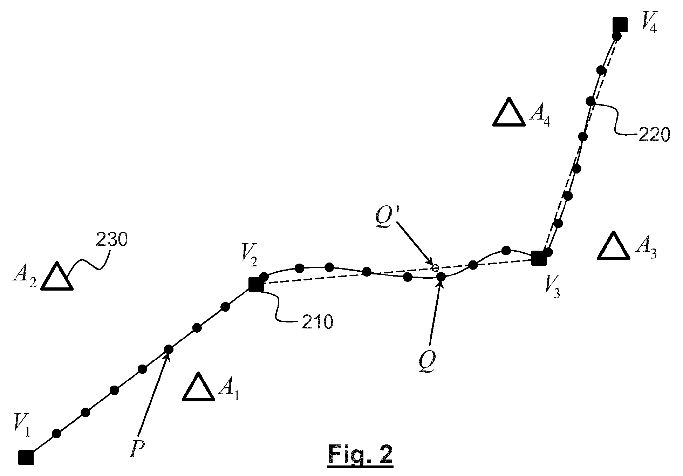

La Fig. 1 illustre schématiquement un terminal mobile destiné à collecter des informations relatives aux points d'accès d'un réseau de télécommunication sans fil, selon un mode de réalisation de l'invention ; La Fig. 2 représente schématiquement une collecte d'informations relatives aux points d'accès le long d'une trajectoire d'un utilisateur équipé du terminal mobile de la Fig. 1.

## EXPOSÉ DÉTAILLÉ DE MODES DE RÉALISATION PARTICULIERS

Nous considérerons dans la suite un terminal mobile évoluant dans un environnement au sein duquel est déployé au moins un réseau de télécommunication sans fil, par exemple un réseau de type GSM, UMTS, Wi-Fi, WiMAX, Bluetooth. Ce réseau comporte une pluralité de points d'accès au sens défini précédemment. L'environnement n'est pas nécessairement de type *indoor* mais l'invention trouve avantageusement à s'appliquer à ce type d'environnement pour lequel la localisation GPS n'est pas disponible.

Le terminal mobile peut collecter des informations relatives aux points d'accès du réseau de télécommunication sans fil, cette collecte étant effectuée le long d'une trajectoire ou d'un itinéraire de l'utilisateur dans ledit environnement. Si plusieurs réseaux sont présents dans l'environnement de l'utilisateur, des informations relatives aux points d'accès des différents réseaux peuvent être collectées en parallèle. Par informations relatives aux points d'accès d'un réseau, on entend des paramètres du point d'accès tels que mesurés, détectés ou estimés par le terminal mobile en un lieu donné. Typiquement, le paramètre d'un point d'accès pourra être le niveau de puissance du signal reçu (RSS) du point d'accès en question ou bien la détection/l'absence de détection de ce point d'accès par le terminal mobile (puissance reçue supérieure à un certain seuil par exemple). Selon une variante, le paramètre d'un point d'accès pourra être un temps aller-retour ou RTD (*Round Trip* Delay) entre l'instant de transmission d'une requête au point d'accès, émise par le terminal mobile, et l'instant de réception, par ce même terminal, de l'accusé de réception du point d'accès. D'autres types de paramètres peuvent être envisagés par l'homme du métier sans sortir du cadre de la présente invention.

La Fig. 1 représente schématiquement un terminal mobile selon un mode de réalisation de l'invention. Ce terminal mobile, 100, est destiné à collecter des informations relatives aux points d'accès d'un réseau de télécommunication sans fil.

Le terminal, 100, comprend des moyens d'affichage 110, tels qu'une interface graphique, typiquement un écran tactile.

Les moyens d'affichage permettent d'afficher une carte de l'environnement, 120, dans lequel évolue l'utilisateur du terminal mobile. Cette carte peut être une carte géographique (utilisation *outdoor*) ou un plan des lieux (utilisation *indoor*) qui peut être enrichi(e) de points de repère et/ou de points d'intérêts (POI), 125, facilitant le repérage de l'utilisateur. Dans des cas particuliers, la carte de l'environnement peut être une carte 3D.

Avantageusement, la carte de l'environnement inclut une représentation graphique, 121, de la trajectoire déjà parcourue par l'utilisateur.

La carte de l'environnement peut être zoomée par l'utilisateur à l'aide de boutons de zoom avant (+), 122, et arrière (-), 123, de manière connue en soi. Ces boutons peuvent être représentés par des symboles sur l'écran tactile ou bien être des touches physiques distinctes de l'écran. Le zoom avant ou arrière pourra également être obtenu en écartant ou en rapprochant les doigts (« pinch » de zoom) sur l'écran tactile, de manière connue en soi.

Dans tous les cas, des moyens de pointage, 126, par exemple une mire de pointage, permet de sélectionner avec une bonne précision un point quelconque de la carte 120. Autrement dit, les moyens de pointage permettent à l'utilisateur de pointer un lieu quelconque sur cette carte.

Les moyens de pointage sont constitués d'une mire fixe par rapport à l'écran tactile. Elle peut être située, par exemple, au milieu de cet écran. Dans cette variante, des boutons optionnels de déplacement de la carte, 127, peuvent être prévus pour permettre à l'utilisateur de déplacer la carte par rapport à la mire de pointage. Alternativement, l'utilisateur pourra simplement déplacer la carte en la faisant glisser à l'aide de son doigt ou d'un stylet.

Selon encore une variante de réalisation, si le terminal est équipé d'un gyroscope, notamment d'un gyroscope MEMS, le déplacement de la carte pourra être obtenu en faisant varier l'attitude du capteur. Ainsi une inclinaison du terminal vers l'avant pourra faire déplacer la carte vers l'avant, etc.

Selon une dernière variante, le déplacement de la carte pourra être effectué automatiquement, en fonction du déplacement de l'utilisateur. Cette variante suppose toutefois que la position de l'utilisateur puisse être estimée au fur et à mesure de son déplacement.

Le terminal comprend également des moyens de validation, par exemple un bouton de validation, 128. Ce bouton de validation peut être représenté par une icône sur l'écran tactile ou bien être une touche physique distincte de l'écran, dédiée ou non. Les moyens de validation permettent à l'utilisateur de valider que la position de l'utilisateur est celle du lieu pointé par les moyens de pointage, comme expliqué plus loin.

Alternativement, les moyens de validation peuvent ne pas nécessiter une intervention manuelle de l'utilisateur. Par exemple, les moyens de validation peuvent détecter un changement de cap de l'utilisateur entre deux segments rectilignes de la trajectoire. Le changement de cap est alors interprété comme la validation du lieu pointé par les moyens de pointage. Cette variante suppose toutefois que la trajectoire soit polygonale et que les sommets du polygone soient successivement pointés.

Les commandes de déplacement de la carte ou de la mire, de pointage et de validation peuvent être vocales. Par exemple, dans le cas mentionné d'une trajectoire polygonale, l'utilisateur pourra signifier par une commande vocale son intention d'aller au sommet suivant. Arrivé en ce sommet, il pourra valider sa position par une commande vocale. Celle-ci pourra en outre déclencher automatiquement le pointage sur le sommet suivant.

Un bouton optionnel de marche/arrêt, 129, permet de lancer/stopper l'exécution d'une application chargée de la collecte des informations relatives aux points d'accès du ou des réseau(x). Alternativement, cette application peut être exécutée en permanence en tâche de fond ou bien dès lors qu'un réseau est détecté.

Cette application comprend des moyens logiciel pour :

- déclencher en des instants successifs l'acquisition d'informations relatives aux points d'accès du réseau de télécommunication sans fil, lesdites informations étant horodatées au moyen d'une horloge du terminal mobile ;
- enregistrer les coordonnées du lieu pointé par lesdits moyens de pointage, à chaque validation de la position de l'utilisateur par lesdits moyens de validation, les coordonnées étant également horodatées par ladite horloge.

L'horloge du terminal mobile peut être ou non synchronisée à une horloge de référence, par exemple celle d'un serveur, au moyen du protocole NPT *(Network Time Protocol).*

Lorsque l'application de collecte est lancée, le terminal mobile acquiert lesdites informations en des instants successifs. A chaque instant d'acquisition, le terminal collecte les données suivantes :

a) les informations relatives aux différents points d'accès, chaque information étant associée à l'identifiant d'un point d'accès du réseau de télécommunication sans fil ;

b) l'instant auquel lesdites informations ont été acquises.

Il est à noter que l'acquisition peut être effectuée en mode synchrone, à des intervalles réguliers, ou asynchrone. En effet, selon le type de système d'exploitation du terminal, l'application pourra contrôler directement ou non l'instant d'acquisition. Ainsi, dans certains cas, l'application pourra simplement requérir une acquisition par le terminal et recevoir un acquittement lorsque celle-ci aura été effectuée. Quel que soit le mode, l'information acquise est horodatée par l'application de collecte.

A chaque acquisition, l'instant (b) permet d'horodater les informations (a). Cet horodatage est avantageusement réalisé grâce à l'horloge système du terminal mobile voire une autre horloge disponible, synchronisée ou non avec une horloge de référence extérieure, par exemple celle d'un serveur, comme expliqué plus haut.

L'information relative à un point d'accès est, par exemple, le niveau de puissance du signal reçu (RSS) de ce point ou bien une information booléenne de détection/non-détection de ce point par le terminal mobile. Cette information dépend bien entendu du lieu où se trouve l'utilisateur au moment de l'acquisition. Alternativement, l'information relative au point d'accès peut être le temps $t_{RTD}$ séparant l'instant d'émission (par le terminal mobile) d'une requête d'interrogation au point d'accès et l'instant de réception (par ce même terminal) de la réponse (accusé de réception) renvoyée par le point d'accès. Selon cette variante, le terminal mobile pourra avantageusement déduire du temps $t_{RTD}$ le temps de traitement $\tau_{AP}$ propre au temps d'accès pour obtenir le temps de vol aller-retour, c'est-à-dire la somme du temps de propagation de la requête et du temps de propagation de la réponse. Le temps de traitement $r_{AP}$ peut être déterminé par le terminal mobile de différentes manières, par exemple au moyen d'une table donnant les temps $\tau_{AP}$ des différents types de point d'accès, stockée dans le terminal mobile, et de la réponse du point d'accès, spécifiant le type auquel il appartient. Le temps de traitement peut également être obtenu au moyen d'une phase de calibration ou bien au moyen de statistiques, une fois que le terminal mobile a pu se localiser. Plus précisément une fois la localisation du terminal mobile obtenue, et connaissant la position d'un point d'accès AP, on peut estimer $\tau_{AP}$ par différence entre le temps $t_{RTD}$ et le temps de propagation aller-retour $t_{RTD}^0$ , soit en ligne directe soit en utilisant un modèle de propagation particulier (NLOS).

Lorsque plusieurs réseaux de télécommunication sans fil sont présents dans la zone où se trouve l'utilisateur, les informations (a) pourront être relatives aux points d'accès des différents réseaux.

D'autres informations, par exemple des mesures physiques, peuvent être collectées en parallèle.

Par exemple, si le terminal mobile est équipé d'un récepteur GPS, il pourra collecter, à chaque instant d'acquisition, les données de visibilité des différents satellites. Ces données indiquent quels sont les satellites visibles du terminal mobile à l'instant en question, c'est-à-dire ceux dont il détecte effectivement le signal de positionnement.

De manière similaire, si le terminal mobile est équipé d'un ou de plusieurs capteurs, tels que magnétomètre, accéléromètre, vélocimètre, baromètre etc., celui-ci pourra également collecter des mesures physiques (intensité et/ou direction du champ magnétique, accélération, vitesse, pression etc.) à chaque instant d'acquisition. Ces mesures seront donc horodatées au même titre que les informations relatives aux points d'accès.

Les données ainsi collectées et horodatées peuvent être stockées dans la mémoire du terminal mobile pour un traitement ultérieur ou bien transmises à un serveur après un nombre prédéterminé d'acquisitions voire à chaque acquisition.

En tout état de cause, lorsque l'utilisateur souhaite indiquer qu'il se trouve en un lieu donné, il pointe à l'aide des moyens de pointage le point de la carte représentant ce lieu et valide sa position à l'aide des moyens de validation. Par exemple, l'utilisateur pointe le lieu avec la mire de pointage et valide sa position en appuyant sur le bouton de validation. Avantageusement, pour des raisons d'efficacité, l'utilisateur pourra préalablement positionner la mire de pointage sur le point de la carte représentant le lieu auquel il souhaite se rendre et valider sa position lorsqu'il atteint cette position.

Selon une variante de mise en oeuvre, l'utilisateur est équipé de plusieurs terminaux capables de communiquer entre eux (par exemple au moyen de liaisons Bluetooth). L'utilisateur peut alors se contenter d'effectuer le pointage et la validation sur l'un d'entre eux seulement, la position validée étant alors partagée entre les différents terminaux. Qui plus est, les horloges des différents terminaux peuvent être synchronisées entre elles. Cette variante permet d'augmenter considérablement la quantité d'informations collectées par passage d'un utilisateur. Elle permet également d'améliorer la fiabilité des mesures en les moyennant sur plusieurs terminaux colloqués.

A chaque validation de position, les moyens logiciel enregistrent les données suivantes :

a') coordonnées du lieu indiqué sur la carte par la mire de pointage au moment de la validation ;

b') instant où la validation de position a été effectuée.

L'instant (b') permet d'horodater le passage du terminal mobile au lieu indiqué par (a'). L'horodatage est réalisé avec la même horloge que celle servant à horodater les informations relatives aux points d'accès (a).

La Fig. 2 illustre de manière schématique un exemple de collecte d'informations relatives aux points d'accès lorsqu'un utilisateur, équipé du terminal mobile décrit précédemment, se déplace le long d'une trajectoire 200.

Les lieux où l'utilisateur a validé sa position sont représentés par le symbole 210 et notés $V_1$ à $V_4$ et ceux où le terminal a effectué une acquisition des informations relatives aux points d'accès sont représentés par le symbole 220. Les points d'accès du réseau de télécommunication sans fil (par exemple un réseau Wi-Fi) sont représentés par le symbole 230 et notés $A_1$ à $A_4$.

La trajectoire de l'utilisateur est idéalement linéaire entre deux instants de validation et la vitesse de déplacement est de préférence constante.

On a supposé sur la figure que ces conditions étaient réunies entre les points $V_1$ et $V_2$. Les points d'acquisition, 220, sont alors distribués le long du segment $V_1V_2$.

Les coordonnées (par exemple latitude, longitude, altitude) des points $V_1$ et $V_2$ sont connues à partir de leurs positions respectives sur la carte, relevées au moment de la validation.

Les coordonnées d'un point d'acquisition quelconque P, situé entre $V_1$ et $V_2$, peuvent alors être obtenues par simple interpolation à partir des coordonnées des points $V_1$ et $V_2$.

A chaque point P d'acquisition, on peut donc associer les coordonnées ainsi calculées ainsi que les informations relatives aux points d'accès du réseau (ainsi qu'optionnellement des mesures physiques additionnelles, comme indiqué plus haut). Dans le cas illustré, le terminal mobile ne détecte au point P que les points d'accès $A_1$ et $A_2$. Les informations acquises en P sont par exemple $(Id(A_1), RSS_1)$ et $(Id(A_2), RSS_2)$ où $Id(A_1)$, $Id(A_2)$ sont les identifiants des points d'accès $A_1$ et $A_2$ et $RSS_1$, $RSS_2$ les niveaux de puissances reçues des points d'accès $A_1$ et $A_2$ au point P. Par exemple, si le réseau de télécommunication sans fil est un réseau Wi-Fi, les identifiants peuvent être les numéros BSSID (*Basic Service Set IDentifier*) des bornes d'accès.

En pratique, comme représenté sur la portion de trajectoire entre les points $V_2$ et $V_3$, les conditions de déplacement rectiligne et de vitesse constante ne sont pas parfaitement vérifiées. La trajectoire réelle (en trait continu) diffère donc de la trajectoire idéale (en pointillés) et le point Q' qui serait obtenu par interpolation des coordonnées de $V_2$ et $V_3$ diffère du point réel d'acquisition, Q. L'écart est néanmoins souvent acceptable compte tenu du degré de précision du positionnement exigé.

Selon une variante, le terminal mobile peut être équipé d'un système de navigation inertiel, utilisant par exemple un accéléromètre MEMS de manière à mesurer en chaque point d'acquisition la vitesse de déplacement de l'utilisateur. Le cap de l'utilisateur peut être en outre obtenu au moyen d'un magnétomètre (compas électronique). Il est alors possible d'estimer les positions des points réels d'acquisition Q. Le calcul des coordonnées d'un point réel Q peut être effectué de proche en proche à partir des coordonnées du point de validation ($V_2$ ou $V_3$) situé immédiatement en amont ou en aval sur la trajectoire. On suppose pour ce faire que la vitesse de déplacement et le cap de l'utilisateur sont constants entre deux points d'acquisition successifs.

Alternativement, si seul le cap de déplacement de l'utilisateur en chaque point d'acquisition est disponible (fourni par exemple par un compas électronique) les coordonnées des points réels entre deux points de validation pourront être obtenues en minimisant une fonction de coût. Pour ce faire, on pourra supposer que la vitesse de déplacement (sa norme) est sensiblement constante entre les deux points de validation. La fonction de coût peut notamment être basée sur un écart par rapport aux coordonnées du point de validation suivant (ou du point de validation précédent en renversant l'axe temporel).

En tout état de cause, à tout point réel d'acquisition Q, on associe les coordonnées ainsi calculées et les informations relatives aux points d'accès, comme expliqué précédemment.

On comprend ainsi que l'on peut constituer rapidement une base de données de signatures RSS (et/ou de données de visibilité) avec une bonne précision sur la position des points d'acquisition. Du fait de l'acquisition automatique de ces signatures, la tâche de collecte de l'utilisateur est grandement facilitée. La précision de ces mesures n'est pas pour autant sacrifiée, grâce aux opérations de validation de position effectuées de temps à autre par l'utilisateur le long de son itinéraire.

Le cas échéant, les informations collectées, déjà présentes dans la base de données, peuvent être utilisées pour estimer plus ou moins grossièrement la position du terminal, la précision du positionnement augmentant au fur et à mesure de la collecte.

Les informations déjà stockées peuvent être agrégées à celles en cours de collecte pour estimer la position de l'utilisateur. Ainsi, celui-ci peut observer en temps réel l'amélioration de la précision du positionnement. Pour ce faire, le serveur estime la position de l'utilisateur à partir des dernières informations transmises par le terminal et celles déjà stockées dans la base (cartographie de mesures RSS et autres). La position est estimée avec un degré de précision qui se traduit par un disque d'incertitude. L'utilisateur peut vérifier si sa position réelle se trouve dans le disque d'incertitude et, en cas d'incohérence, le signaler au serveur (message d'erreur).

Dans un mode collaboratif, plusieurs utilisateurs équipés chacun d'un terminal tel que précédemment décrit, parcourent une même zone géographique d'intérêt. Les données acquises par un terminal et stockées dans la base peuvent être alors utilisées par un autre terminal pour son propre positionnement.

Chaque utilisateur peut avoir un itinéraire à parcourir dans la zone d'intérêt ou bien avoir le choix entre plusieurs itinéraires. Il peut également librement choisir son itinéraire en fonction de ceux déjà parcourus. Les itinéraires peuvent être sauvegardés de manière centralisée par le serveur et être affichés sur la carte de chaque terminal.

Avantageusement, en mode collaboratif ou non, le serveur tient à jour une cartographie de la couverture de la zone d'intérêt (densité de points d'acquisition, trajectoires déjà parcourues). Ces informations de couverture (ou indicateur de couverture) peuvent être envoyées par le serveur au terminal pour être affichées sur l'écran de ce dernier, en superposition avec la carte de ladite zone. L'utilisateur peut alors déterminer son itinéraire en privilégiant les parties les moins densément couvertes.

Alternativement ou cumulativement, toujours en mode collaboratif ou non, le serveur peut tenir à jour une cartographie de la qualité du positionnement obtenu à l'aide des informations relatives aux points d'accès déjà stockées dans la base de données. La qualité de positionnement peut être représentée par un indicateur tenant compte de la densité des points d'acquisition, du nombre de points d'accès vu en chaque point d'acquisition (taille du vecteur de mesure RSSI par exemple), etc. L'indicateur de qualité peut être affiché sur l'écran tactile à l'aide d'un code de couleur (*heatmap*).

Enfin, l'utilisateur est guidé dans son déplacement par l'affichage de la carte sur l'écran du terminal. Comme indiqué plus haut, la carte peut être déplacée à l'aide d'une commande manuelle ou vocale. La carte peut alternativement être déplacée en mode automatique (étant entendu que le mode manuel peut à tout moment débrayer le mode automatique). Dans le mode automatique, la carte est déplacée en fonction de la vitesse et du cap de l'utilisateur. La vitesse de l'utilisateur peut être obtenue par exemple grâce à des capteurs MEMS équipant le terminal ou en calculant la vitesse moyenne entre deux positions validées. Le cap peut être fourni soit à l'aide d'un magnétomètre (compas électronique) soit encore à partir du vecteur joignant le dernier point de validation et la position courante de la mire (on suppose dans ce cas que l'utilisateur a déplacé la mire après la dernière validation pour indiquer la direction qu'il emprunte). Sur la base de la vitesse et du cap ainsi estimés, la carte peut être déplacée automatiquement sur l'écran (en fonction de son échelle).

Si la zone d'intérêt comporte plusieurs niveaux, (plusieurs étages d'un immeuble par exemple), une carte sera associée à chaque niveau. Dès lors qu'un changement de niveau est détecté (composante verticale de vitesse, détection d'un identifiant d'un point d'accès situé sur un étage, sélection ou incrémentation/décrémentation d'étage par l'utilisateur grâce à un bouton d'action sur l'écran tactile), la carte de ce niveau peut être automatiquement chargée en conservant le centrage sur les coordonnées horizontales de la carte précédente, pour assurer la continuité du guidage.

**Revendications**

1. Terminal mobile (100) destiné à collecter des informations relatives aux points d'accès (A1-A4) d'au moins un réseau de télécommunication sans fil, **caractérisé en ce qu'**il comprend:

   - un écran tactile (110) pour afficher une carte (120) d'une zone d'intérêt ;
   - une mire (126), affichée sur l'écran tactile (110) et immobile par rapport à ce dernier, la mire (126) étant destinée à pointer un lieu sur cette carte (120);
   - des moyens de validation (128) pour valider que la position de l'utilisateur du terminal mobile (100) est celle du lieu ainsi pointé par la mire (126) sur ladite carte (120) ;
   - des moyens logiciel pour :

     enregistrer les coordonnées du lieu pointé par la mire (126), à chaque validation de la position de l'utilisateur par lesdits moyens de validation (128), les coordonnées étant horodatées par une horloge du terminal mobile (100) ;

déclencher en des instants successifs l'acquisition, des informations relatives aux points d'accès (A1-A4) du réseau de télécommunication sans fil, lesdites informations étant également horodatées au moyen de ladite horloge du terminal mobile (100).

2. Terminal mobile (100) selon la revendication 1, **caractérisé en ce que** les informations relatives aux points d'accès (A1-A4) comprennent des niveaux de puissance des signaux respectivement reçus par ledit terminal mobile (100) de ces points d'accès (A1-A4).

3. Terminal mobile (100) selon la revendication 1, **caractérisé en ce que** les informations relatives aux points d'accès (A1-A4) comprennent une indication de détection/non-détection d'au moins l'un desdits points d'accès (A1-A4).

4. Terminal mobile (100) selon la revendication 2 ou 3, **caractérisé en ce que** les informations relatives aux points d'accès (A1-A4) comprennent en outre, pour chaque point d'accès (A1-A4), un identifiant de ce point d'accès (A1-A4).

5. Terminal mobile (100) selon la revendication 1, **caractérisé en ce que** les informations relatives aux points d'accès (A1-A4) comprennent, pour chaque point d'accès (A1-A4), un temps de propagation aller-retour entre le terminal mobile (100) et ce point d'accès (A1-A4).

6. Terminal mobile (100) selon l'une quelconque des revendications précédentes, **caractérisé en ce qu'**il comprend un récepteur GPS et que les moyens logiciel déclenchent en outre aux dits instants successifs l'acquisition d'informations de visibilité de différents satellites, lesdites informations étant horodatées au moyen de ladite horloge.

7. Terminal mobile (100) selon l'une quelconque des revendications précédentes, **caractérisé en ce qu'**il comprend au moins un capteur d'une grandeur physique et que les moyens logiciel déclenchent en outre aux dits instants successifs l'acquisition de mesures physiques par ledit capteur, lesdites mesures étant horodatées au moyen de ladite horloge.

8. Terminal mobile (100) selon la revendication 7, **caractérisée en ce que** ledit capteur appartient à un ensemble constitué d'un accéléromètre, d'un vélocimètre, d'un magnétomètre, d'un baromètre.

9. Terminal mobile (100) selon la revendication 1, **caractérisé en ce que** la carte (120) est déplacée en fonction de l'attitude du terminal mobile (100).

10. Terminal mobile (100) selon la revendication 1, **caractérisé en ce que** la carte (120) est déplacée en fonction de la vitesse et du cap de l'utilisateur.

11. Terminal mobile (100) selon l'une quelconque des revendications précédentes, **caractérisée en ce que** les moyens de validation (128) valident la position de l'utilisateur lorsqu'une variation de cap est détectée.

12. Méthode de collecte d'informations relatives aux points d'accès (A1-A4) d'au moins un réseau de télécommunication sans fil dans une zone d'intérêt, à l'aide du terminal mobile (100) selon la revendication 1,

**caractérisée en ce que**, pour chaque acquisition desdites informations, on détermine la position de l'utilisateur à l'instant de ladite acquisition en effectuant une interpolation entre :

- une première position de l'utilisateur validée par les moyens de validation (128) en un premier instant de validation précédant l'instant de ladite acquisition ; et
- une seconde position de l'utilisateur validée par les moyens de validation (128) en un second instant de validation suivant l'instant de ladite acquisition.

13. Méthode de collecte d'informations selon la revendication 12, **caractérisée en ce que** l'on associe à la position de l'utilisateur à l'instant de ladite acquisition, ainsi déterminée par interpolation, les informations relatives aux points d'accès (A1-A4) du réseau de télécommunication sans fil, obtenues par le terminal mobile (100) à l'instant de ladite acquisition.

14. Méthode de collecte d'informations selon la revendication 12, **caractérisée en ce que** la position de l'utilisateur ainsi déterminée par interpolation, et lesdites informations relatives aux points d'accès (A1-A4), sont transmises à un serveur distant et stockées dans une base de données.

15. Méthode de collecte d'informations selon la revendication 14, **caractérisée en ce que** le serveur détermine une cartographie de la couverture de la zone d'intérêt et la transmet au terminal mobile (100) pour l'afficher sur l'écran tactile (110) de ce dernier en superposition avec la carte (120) de ladite zone d'intérêt.

16. Méthode de collecte d'informations selon la revendication 14 ou 15, **caractérisée en ce que** le serveur détermine un indicateur de qualité de positionnement dans la zone d'intérêt et le transmet au terminal mobile (100) pour l'afficher sur l'écran tactile (110) de ce dernier en superposition avec la carte (120) de ladite zone d'intérêt.

17. Méthode de collecte d'informations selon l'une quelconque des revendications 12 à 16, **caractérisée en ce qu'**un autre terminal de l'utilisateur est adapté à synchroniser son horloge avec celle du terminal mobile (100) et à partager avec lui la position de l'utilisateur obtenue à chaque validation, ledit autre terminal déclenchant en outre l'acquisition de secondes informations relatives aux points d'accès (A1-A4) du réseau de télécommunication sans fil en des instants successifs, lesdites secondes informations étant horodatées au moyen de l'horloge ainsi synchronisée.

18. Méthode de collecte d'informations selon l'une quelconque des revendications 12 à 17, **caractérisée en ce que** le réseau de télécommunication sans fil est un réseau Wi-Fi.

**Patentansprüche**

1. Bewegliches Terminal (100) zum Sammeln von Informationen bezüglich Zugangspunkten (A1-A4) wenigstens eines drahtlosen Telekommunikationsnetzes, **dadurch gekennzeichnet, dass** es umfasst:

   - einen berührungsempfindlichen Bildschirm (110) zum Anzeigen einer Karte (120) einer interessierenden Zone;
   - ein Muster (126), das auf dem berührungsempfindlichen Bildschirm (110) angezeigt wird und bezüglich dieses Letztgenannten unbeweglich ist, wobei das Muster (126) dazu ausgelegt ist, auf einen Ort auf dieser Karte (120) zu zeigen;
   - Validierungsmittel (128) zum Validieren, dass die Position des Benutzers des beweglichen Terminals (100) jene des Ortes ist, auf den das Muster (126) somit auf der Karte (120) zeigt;
   - Softwaremittel zum:

      Speichern der Koordinaten des Ortes, auf den das Muster (126) zeigt, bei jeder Validierung der Position des Benutzers durch die Validierungsmittel (128), wobei die Koordinaten durch eine Uhr des beweglichen Terminals (100) mit einem Zeitstempel versehen sind;
      Auslösen von Informationen bezüglich der Zugangspunkte (A1-A4) des drahtlosen Telekommunikationsnetzes an aufeinanderfolgenden Zeitpunkten, wobei die Informationen ebenfalls mittels der Uhr des beweglichen Terminals (100) mit einem Zeitstempel versehen sind.

2. Bewegliches Terminal (100) nach Anspruch 1, **dadurch gekennzeichnet, dass** die Informationen bezüglich der Zugangspunkte (A1-A4) Leistungspegel der Signale umfassen, die durch das bewegliche Terminal (100) jeweils von diesen Zugangspunkten (A1-A4) empfangen werden.

3. Bewegliches Terminal (100) nach Anspruch 1, **dadurch gekennzeichnet, dass** die Informationen bezüglich der Zugangspunkte (A1-A4) eine Angabe der Erfassung/Nichterfassung wenigstens eines der Zugangspunkte (A1-A4) umfassen.

4. Bewegliches Terminal (100) nach Anspruch 2 oder 3, **dadurch gekennzeichnet, dass** die Informationen bezüglich derZugangspunkte (A1-A4) ferner für jeden Zugangspunkt (A1-A4) einen Identifikator dieses Zugangspunkts (A1-A4) umfassen.

5. Bewegliches Terminal (100) nach Anspruch 1, **dadurch gekennzeichnet, dass** die Informationen bezüglich der Zugangspunkte (A1-A4) für jeden Zugangspunkt (A1-A4) eine Hin-Zurück-Ausbreitungszeit zwischen dem beweglichen Terminal (100) und diesem Zugangspunkt (A1-A4) umfassen.

6. Bewegliches Terminal (100) nach einem der vorhergehenden Ansprüche, **dadurch gekennzeichnet, dass** es einen GPS-Empfänger umfasst, und dass die Softwaremittel ferner an den aufeinanderfolgenden Zeitpunkten die Erfassung von Sichtbarkeitsinformationen von verschiedenen Satelliten auslösen, wobei die Informationen mittels der Uhr mit einem Zeitstempel versehen sind.

7. Bewegliches Terminal (100) nach einem der vorhergehenden Ansprüche, **dadurch gekennzeichnet, dass** es wenigstens einen Sensor für eine physikalische Größe umfasst, und dass die Softwaremittel ferner an den aufeinanderfolgenden Zeitpunkten die Erfassung von physikalischen Messungen durch den Sensor auslösen, wobei die Messungen mittels der Uhr mit Zeitstempeln versehen sind.

8. Bewegliches Terminal (100) nach Anspruch 7, **dadurch gekennzeichnet, dass** der Sensor zu einer Gesamtheit gehört, gebildet durch einen Beschleunigungsmesser, einen Geschwindigkeitsmesser, ein Magnetometer, ein Barometer.

9. Bewegliches Terminal (100) nach Anspruch 1, **dadurch gekennzeichnet, dass** die Karte (120) als Funktion der Lage des beweglichen Terminals (100) verlagert wird.

**10.** Bewegliches Terminal (100) nach Anspruch 1, **dadurch gekennzeichnet, dass** die Karte (120) als Funktion der Geschwindigkeit und des Kurses des Benutzers verlagert wird.

**11.** Bewegliches Terminal (100) nach einem der vorhergehenden Ansprüche, **dadurch gekennzeichnet, dass** die Validierungsmittel (128) die Position des Benutzers validieren, wenn eine Veränderung des Kurses erfasst wird.

**12.** Verfahren zum Sammeln von Informationen bezüglich Zugangspunkten (A1-A4) wenigstens eines drahtlosen Telekommunikationsnetzes in einer interessierenden Zone mit Hilfe des beweglichen Terminals (100) nach Anspruch 1, **dadurch gekennzeichnet, dass** man für jede Erfassung der Informationen die Position des Benutzers zum Zeitpunkt der Erfassung bestimmt, indem man eine Interpolation durchführt zwischen:

> - einer ersten Position des Benutzers, die durch die Validierungsmittel (128) an einem ersten Validierungszeitpunkt validiert ist, der vor dem Zeitpunkt der Erfassung liegt;
> - eine zweite Position des Benutzers, die durch die Validierungsmittel (128) an einem zweiten Validierungszeitpunkt validiert ist, der dem Zeitpunkt der Erfassung folgt.

**13.** Verfahren zum Sammeln von Informationen nach Anspruch 12, **dadurch gekennzeichnet, dass** man der somit mittels Interpolation bestimmte Position des Benutzers zum Zeitpunkt der Erfassung die Informationen bezüglich der Zugangspunkte (A1-A4) des drahtlosen Kommunikationsnetzes zuordnet, die durch das bewegliche Terminal (100) zum Zeitpunkt der Erfassung erhalten wurden.

**14.** Verfahren zum Sammeln von Informationen nach Anspruch 12, **dadurch gekennzeichnet, dass** die somit mittels Interpolation bestimmte Position des Benutzers und die Informationen bezüglich der Zugangspunkte (A1-A4) an einen entfernten Server übertragen und in einer Datenbank gespeichert werden.

**15.** Verfahren zum Sammeln von Informationen nach Anspruch 14, **dadurch gekennzeichnet, dass** der Server eine Kartographie der Abdeckung der interessierenden Zone bestimmt und sie an das bewegliche Terminal (100) überträgt, um sie auf dem berührungsempfindlichen Bildschirm (110) dieses Letztgenannten in Überlagerung mit der Karte (120) der interessierenden Zone anzuzeigen.

**16.** Verfahren zum Sammeln von Informationen nach Anspruch 14 oder 15, **dadurch gekennzeichnet, dass** der Server eine Angabe der Positionierungsqualität in der interessierenden Zone bestimmt und sie an das bewegliche Terminal (100) überträgt, um sie auf dem berührungsempfindlichen Bildschirm (110) dieses Letztgenannten in Überlagerung mit der Karte (120) der interessierenden Zone anzuzeigen.

**17.** Verfahren zum Sammeln von Informationen nach einem der Ansprüche 12 bis 16, **dadurch gekennzeichnet, dass** ein weiteresTerminal des Benutzers dazu ausgelegt ist, seine Uhr mit jener des beweglichen Terminals (100) zu synchronisieren und mit ihm die bei jeder Validierung erhaltene Position des Benutzers zu teilen, wobei das weitere Terminal ferner die Erfassung von zweiten Informationen bezüglich der Zugangspunkte (A1-A4) des drahtlosen Telekommunikationsnetzes an aufeinanderfolgenden Zeitpunkten auslöst, wobei die zweiten Informationen mittels der derart synchronisierten Uhr mit einem Zeitstempel versehen werden.

**18.** Verfahren zum Sammeln von Informationen nach einem der Ansprüche 12 bis 17, **dadurch gekennzeichnet, dass** das drahtlose Telekommunikationsnetz ein Wifi-Netz ist.

**Claims**

**1.** Mobile terminal (100) designed to collect information about access points (A1-A4) in at least one wireless telecommunication network, **characterized in that** it comprises:

> - a touch screen (110) for displaying a map (120) of a zone of interest;
> - a pointing pattern (126), displayed on said touch screen (110) and fixed relative thereto, said pointing pattern (126) being adapted at pointing at a location on this map (120);
> - validation means (128) to validate that the position of the user of the mobile terminal (100) is the position of the location thus pointed at by the pointing pattern (126) on said map (120);
> - software means to:
>
>> - record the coordinates of the location pointed at by the pointing pattern (126), each time the location of the position of the user is validated by said validation means (128), the coordinates being time-stamped by a clock of the mobile terminal (100);
>> - trigger acquisition of the information about access points (A1-A4) in the wireless telecommunication network at successive times, said information being time-stamped using by said clock in the mobile terminal (100).

2. Mobile terminal (100) according to claim 1, **characterised in that** information about access points (A1-A4) include strength levels of the signals received by said mobile terminal (100) from these access points (A1-A4).

3. Mobile terminal (100) according to claim 1, **characterised in that** information about access points (A1-A4) include a detection/non-detection indication of at least one of said access points (A1-A4).

4. Mobile terminal (100) according to claim 2 or 3, **characterised in that** information about access points (A1-A4) also includes, for each access point (A1-A4), an identifier of said access point (A1-A4).

5. Mobile terminal (100) according to claim 1, **characterised in that** information about access points (A1-A4) includes, for each access point (A1-A4), a round trip propagation time between the mobile terminal (100) and said access point (A1-A4).

6. Mobile terminal (100) according to any one of the previous claims, **characterised in that** it comprises a GPS receiver and **in that** software means also trigger the acquisition of visibility information for the various satellites at said successive times, said information being time-stamped using said clock.

7. Mobile terminal (100) according to any one of the previous claims, **characterised in that** it comprises at least one physical quantity sensor and **in that** the software means start physical measurement acquisitions using said sensor at said successive times, said measurements being time-stamped by said clock.

8. Mobile terminal (100) according to claim 7, **characterised in that** said sensor belongs to a set composed of an accelerator, a velocity meter, a magnetometer and a barometer.

9. Mobile terminal (100) according to claim 1, **characterised in that** the map (120) is displaced as a function of the attitude of the mobile terminal (100).

10. Mobile terminal (100) according to claim 1, **characterised in that** the map (120) is displaced as a function of the velocity and the heading of the user.

11. Mobile terminal (100) according to any one of the previous claims, **characterised in that** the validation means (128) validate the user's position when a change of heading is detected.

12. Method of collecting information about access points (A1-A4) in at least one wireless telecommunication network in a zone of interest, using the mobile terminal (100) according to claim 1, **characterised in that** the position of the user is determined for each acquisition of said information at the time of said acquisition by making an interpolation between:

- a first user position validated by validation means (128) at a first validation time before said acquisition time; and
- a second position of the user validated by validation means (128) at a second validation time after said acquisition time.

13. Method of collecting information according to claim 12, **characterised in that** the position of the user at the time of said acquisition thus determined by interpolation is associated with information about access points (A1-A4) in the wireless telecommunication network obtained by the mobile terminal (100) at the time of said acquisition.

14. Method of collecting information according to claim 12, **characterised in that** the position of the user thus determined by interpolation and said information about access points (A1-A4) are advantageously sent to a remote server and are stored in a database.

15. Method of collecting information according to claim 14, **characterised in that** the server determines a coverage map of the zone of interest and sends it to the mobile terminal to display it on the touch screen (110) of this mobile terminal (100), superposed on the map (120) of said zone.

16. Method of collecting information according to claim 14 or 15, **characterised in that** the server determines a positioning quality indicator in the zone of interest and sends it to the mobile terminal (100) to display it on the touch screen (120) of this mobile terminal (100) superposed on the map (120) of said zone of interest.

17. Method of collecting information according to any one of claims 12 to 16, **characterised in that** another user's terminal is adapted to synchronise its clock with the clock of the mobile terminal (100) and to share the user's position obtained at each validation with it, said other terminal also starting acquisition of second information about access points (A1-A4) in the wireless telecommunication network at successive times, said second information being time-stamped using the clock thus synchronised.

18. Method of collecting information according to any one of claims 12 to 17, **characterised in that** the wireless telecommunication network is a Wi-Fi network.

**Fig. 1**

**Fig. 2**

**EP 2 756 326 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090005972 A